# EUROPÄISCHE PATENTSCHRIFT

(11) **EP 3 524 036 B1**
(45) Veröffentlichungstag und Bekanntmachung des Hinweises auf die Patenterteilung: **10.08.2022**
(21) Anmeldenummer: 17772409.3
(22) Anmeldetag: 25.09.2017
(51) Int. Cl.: H05B 47/195, H05B 45/00, H04B 10/116, H04B 10/50

(54) **INTEGRIERTE ANORDNUNG MODULIERBARER LICHTPUNKTE FÜR KOMMUNIKATION MITTELS SICHTBAREM LICHT**
INTEGRATED ARRANGEMENT OF ADJUSTABLE POINTS OF LIGHT FOR COMMUNICATION BY MEANS OF VISIBLE LIGHT
ENSEMBLE INTÉGRÉ DE POINTS LUMINEUX MODULABLES AUX FINS DE COMMUNICATION AU MOYEN D'UNE LUMIÈRE VISIBLE

(30) Priorität: 04.10.2016 DE 102016219200
(43) Veröffentlichungstag der Anmeldung: 14.08.2019
(73) Patentinhaber: Tridonic GmbH & Co KG, 6851 Dornbirn (AT)
(72) Erfinder: MOORMANN, Christan, 22587 Hamburg (DE)
(74) Vertreter: Beder, Jens
(86) Internationale Anmeldenummer: PCT/EP2017/074165
(87) Internationale Veröffentlichungsnummer: WO 2018/065247

(56) Entgegenhaltungen:
- EP-A1- 2 783 549
- CN-A- 104 767 565
- US-A1- 2007 230 965
- US-A1- 2012 269 520
- US-A1- 2013 236 183
- US-A1- 2014 064 739
- US-A1- 2015 372 753

## Beschreibung

Die Erfindung betrifft eine Mehrzahl integrierter LED-Schaltkreise mit integriertem elektronischen Schaltkreis für eine Kommunikation mittels sichtbarem Licht mit einem entsprechend ausgelegten LED-Modul, und eine entsprechend ausgebildete Leuchte.

Für Beleuchtungsaufgaben werden zunehmend Leuchtdioden (LED) als lichtemittierende Elemente eingesetzt. Dabei sind ein oder mehrere LEDs in einem LED-Modul mit geeigneten Ansteuerschaltungen zur Versorgung der LED mit einem Strom und zur Steuerung der Lichtabgabe zusammengefasst.

Die internationale Offenlegungsschrift WO 2008/131939 A1 zeigt ein LED-Modul, das eine LED als integrierten Schaltkreis auf einer Siliziumtragestruktur anordnet. Die Siliziumtragestruktur ist eine Siliziumscheibe als Montagebasis, die zwischen dem Boden des eigentlichen LED-Halbleiterbauelements einerseits und einer Massefläche des LED-Moduls angeordnet ist, um Aufgaben der elektrischen Isolation, der thermischen Ableitung und des Ausgleichs von Wärmeausdehnungskoeffizienten wahrzunehmen.

Die Siliziumtragestruktur umfasst dabei eine oder mehrere elektronische Komponenten zur Steuerung der Lichtabgabe der LED. Eine elektronische Komponente kann dabei beispielsweise die Energieversorgung des LED-Halbleiterbauelements gewährleisten. Weitere elektronische Komponenten können dabei weitere Funktionen für das LED-Modul realisieren. So ist beispielsweise die Ausbildung der elektronischen Komponente als Funkkommunikationsvorrichtung erwähnt. Dabei wird insbesondere eine Anordnung der Funkkommunikationsvorrichtung innerhalb der Siliziumtragestruktur und seitlich der lichtemittierenden LED-Halbleiterstruktur als vorteilhaft erwähnt.

Neben Funkkommunikationsverfahren sind lichtgestützte Kommunikationsverfahren (Visible Light Communication - VLC), die Licht als Übertragungsmedium für die Übertragung von Daten nutzen, bekannt. Derartige lichtgestützte Kommunikationsverfahren können eine Datenübertragung sowohl mit niedriger als auch mit hoher Datenrate aufweisen. Beispiele für lichtgestützte Kommunikationsverfahren mit niedriger Datenrate sind Navigationsanwendungen, oder die Ausgabe einer Identifikationsnummer, insbesondere einer Leuchten-Identifikationsnummer zur eindeutigen Identifikation einer Leuchte. Ein Beispiel für eine lichtgestützte Kommunikation mit hoher Datenrate ist das Übertragungsverfahren "Light Fidelity" (kurz: Li-Fi). Li-Fi ist beispielsweise für die Übertragung von Bildoder Videodaten besonders geeignet. Der Begriff VLC wird im Folgenden für alle Arten der lichtgestützten Kommunikation verwendet.

Die Wellenlänge des zur Übertragung genutzten Lichtes befindet sich dabei im sichtbaren Bereich zwischen 375 nm und 750 nm. Zur Erzeugung des benötigten Lichtes werden Leuchtstofflampen oder LEDs verwendet. Übertragungsraten bis zu 10 Kbit/s (für Leuchtstofflampen) oder bis 10 Gbit/s (für LED) wurden erreicht. Auf der Empfängerseite wandelt dabei ein Fotodetektor Lichtsignale mit modulierter Information wieder in elektrische Signale um. Durch die spezifischen Eigenschaften des Lichts eignet sich diese Technologie für den Einsatz als Übertragungstechnologie besonders, da Licht der entsprechenden Wellenlängen als für das menschliche Auge ungefährlich gilt, nahezu überall einsetzbar ist und durch eine optische Abschirmung leicht in der räumlichen Ausbreitung begrenzt werden kann. Weiter ist die lizenzfreie, da nicht regulierte Verwendung des genutzten Frequenzspektrums möglich.

Das zu übertragende informationstragende Signal (Datensignal) wird dabei mittels eines Modulators auf den LED-Strom der für die Datenübertragung verwendeten LEDs aufmoduliert. Der Modulator ist dabei als separate Baugruppe oder integriert in die LED-Ansteuerung für alle gemeinsam anzusteuernden LEDs in ein Betriebsgerät (LED-Konverter, Ballast) ausgebildet. Damit wird für alle angesteuerten LEDs ein gemeinsames, moduliertes Lichtsignal erzeugt. Die Signalbandbreite der einzelnen für die VLC-Übertragung genutzten LEDs entspricht damit der Systembandbreite des VLC-Systems. Die Integration unterschiedlicher Signale, beispielsweise unterschiedlicher Anwendungen, wie Datenübertragung (Streaming), Positionsbestimmung, und Signale nach unterschiedlichen Kommunikationsstandards für VLC erfolgt im Zeitmultiplexverfahren. Damit ist jedoch eine nachteilige Vergrößerung der Latenzzeit der Datenübertragung verbunden.

US 2013/236183 A1 zeigt einen VLC-Transceiver und ein VLC-System. Der VLC-Transceiver umfasst ein Substrat, ein Linsenmodul und mehrere Kanaleinheiten. Die Kanaleinheiten sind als Array auf dem Substrat angeordnet, um verschiedene bidirektionale Kommunikationskanäle bereitzustellen. Jede der Kanaleinheiten umfasst jeweils mindestens einen Sender für sichtbares Licht und mindestens einen Empfänger für sichtbares Licht. Die Kanaleinheiten können die Kommunikationsbandbreite mittels Modulationstechniken wie Raummultiplex oder Zeitmultiplex verbessern. Das Linsenmodul ist in einem Strahlengang der Kanaleinheiten angeordnet. Das Linsenmodul verfolgt aktiv die Empfangssituation des Empfängers für sichtbares Licht, um die Signalqualität der der Hochgeschwindigkeits-Multiplexkommunikation zu verbessern.

US 2007/230 965 A1 offenbart ein optisches Kommunikationsmodul, das ein Substrat mit einer länglichen rechteckigen Form umfasst. Weiter umfasst das Kommunikationsmodul ein lichtemittierendes Element und ein lichtempfangendes Element, die auf dem Substrat nebeneinander in Längsrichtung des Substrats angeordnet sind, sowie ein Gießharzpaket, das zwei Linsenabschnitte enthält, die jeweils vor dem lichtemittierenden Element und dem lichtempfangenden Element hervorragen und das lichtemittierende Element und das lichtempfangende Element abdecken. Weiter weist das optische Kommunikationsmodul ein abschirmendes Gehäuse zum Abschirmen des lichtemittierenden Elements und des lichtempfangenden Elements gegen elektromagnetische Wellen und Licht auf. Das optische Kommunikationsmodul weist eine Oberfläche auf, die sich in Längsrichtung erstreckt und als Montagefläche für die Montage auf einer Montageplatte dient. Jeder der Linsenabschnitte ist in drei Richtungen von dem Abschirmgehäuse bedeckt, von denen zwei Richtungen der Längsrichtung des Substrats entsprechen und eine Richtung der Richtung entgegengesetzt ist, in der die Montagefläche orientiert ist.

EP 2 783 549 A1 zeigt ein Beleuchtungssystem mit Wellenlängenerfassung. Das Beleuchtungssystem umfasst eine Lichtquelle, einen Sensor sowie eine Steuereinrichtung, wobei eine oder mehrere Lichtquellen und Sensoren in einem Array angeordnet sein können. Die Lichtquelle kann Licht für Beleuchtungszwecke abgeben, und der Sensor Umgebungslicht erfassen. Das abgegebene Licht kann Daten umfassen. Eine Vielzahl von Knoten des Beleuchtungssystems ist in einem Netzwerk verbunden. Die Knoten können durch Senden und Empfangen von Daten mittels Licht miteinander kommunizieren, wobei die Steuereinrichtung das gesendete und empfangen Licht mit den Daten analysiert. Lichtquelle und Sensor können mittels eines lichtabgebenden Halbleitelements verwirklicht werden, das für die Lichtabgabe für Beleuchtungsanwendungen und den Empfang von Umgebungslicht eingerichtet ist. Ein Konversionsmaterial kann vorgesehen sein, um die Wellenlänge von Licht in konvertiertes Licht umzuwandeln. Das Konversionsmaterial kann einen Wellenlängenbereich des von dem Beleuchtungssystem abgegebenen Lichts und des von dem Beleuchtungssystem erfassten Lichts erweitern.

US 2014/064739 A1 offenbart ein lichtgestütztes Kommunikationssystem, einen Sender und einen Empfänger. Das lichtgestützte Kommunikationssystem umfasst den Sender und den Empfänger. Der Sender hat eine erste Verarbeitungseinheit und ein lichtemittierendes Element. Die erste Verarbeitungseinheit erzeugt ein Sendesignal. Das lichtemittierende Element erzeugt ein Lichtsignal für eine Übermittlung des Sendesignals. Der Empfänger hat eine erste variable Linse, ein lichtempfindliches Element und eine zweite Verarbeitungseinheit. Die erste variable Linse ändert den Ausbreitungspfad des Lichts. Das lichtempfindliche Element erfasst das Licht, das durch die erste variable Linse geleitet wird, um ein Empfangssignal zu erzeugen. Die zweite Verarbeitungseinheit steuert die erste variable Linse basierend auf einer Signalqualität des Empfangssignals, um einen äquivalenten Kanal zwischen dem Sendesignal und dem Empfangssignal zu ändern. Daher wird die Übertragungsfähigkeit des Lichtkommunikationssystems verbessert.

CN 104767565 A zeigt ein MIMO-Lichtkommunikationsverfahren (Multiple Input-Multiple Output: Mehrfacheingang-Mehrfachausgang), eine MIMO-Lichtkommunikationsvorrichtung und ein MIMO-Lichtkommunikationssystem. Ein zu sendendes Übertragungssignal wird auf Lichtträger mit unterschiedlichen spektralen Eigenschaften moduliert, ein Lichtmodulationssignal erzeugt und übertragen.

US 2015/372753 A1 offenbart Verfahren, sowie Systeme und Vorrichtungen für die Übertragung einer Kennungsinformation unter Verwendung von Kommunikation mit sichtbarem Licht (VLC) und zum Erzeugen einer Vielzahl von Kennungsinformationen zur Übertragung mittels VLC. Eine Eingabe, die einen einer Lichtquelle zugeordneten Beleuchtungsfaktor identifiziert, wird empfangen. Ein erster Satz von Modulationsparametern wird zum Übertragen der Kennungsinformation mittels VLC modifiziert. Der erste Satz von Modulationsparametern wird basierend auf dem Beleuchtungsfaktor modifiziert. Ein Signal, in dem die Kennungsinformation codiert ist, wird an die Lichtquelle angelegt. Das Signal wird gemäß dem ersten Satz von Modulationsparametern angelegt. Ein weiteres Verfahren umfasst Identifizieren einer Anzahl von Lichtübertragungsvorrichtungen, Erzeugen einer Vielzahl von Kennungsinformationen basierend auf der identifizierten Anzahl von Lichtübertragungsvorrichtungen, Speichern der erzeugten Kennungsinformationen, Bestimmen einer Vielzahl von zyklischen Verschiebungen für jede Kennungsinformation der Vielzahl von Kennungsinformationen und Entfernen von Kennungsinformationen aus der Vielzahl von Kennungsinformationen, die mit den identifizierten zyklischen Verschiebungen für Kennungsinformationen übereinstimmen.

Es ist die technische Aufgabe einer Erhöhung der Übertragungskapazität für die Datenübertragung mittels Licht und bei der Verwendung von LEDs gegenüber den bekannten Verfahren zu lösen.

Die Aufgabe wird durch ein LED-Modul nach Anspruch 1, sowie eine entsprechende Leuchte gelöst.

Das LED-Modul umfasst eine Mehrzahl integrierter LED-Schaltkreise, die jeweils mindestens eine Leuchtdiode und einen, der mindestens einen Leuchtdiode zugeordneten elektronischen Schaltkreis umfassen. Dabei strahlen die einzelnen integrierten LED-Schaltkreise der Mehrzahl von integrierten LED-Schaltkreisen jeweils Licht in unterschiedliche Raumsegmente ab. Jeder der elektronischen Schaltkreise ist ausgelegt, einen Strom durch die mindestens eine, zugeordnete Leuchtdiode mit einem informationstragenden Signal zu modulieren. Das informationstragende Signal ist dabei ein Navigationssignal. Das LED-Modul zeichnet sich dadurch aus, dass in jedem integrierten LED-Schaltkreis die mindestens eine Leuchtdiode und der zugeordnete elektronische Schaltkreis auf einem gemeinsamen Substrat angeordnet und als ein integriertes Halbleiterbauelement ausgebildet sind. Jeder elektronische Schaltkreis ist ausgelegt, den Strom durch die mindestens eine zugeordnete Leuchtdiode mit dem informationstragenden Signal unabhängig von den Strömen durch die mindestens eine Leuchtdiode der anderen integrierten LED-Schaltkreise zu modulieren.

Damit wird für das erfindungsgemäße LED-Modul der integrierte LED-Schaltkreis einzeln und damit unabhängig von einem weiteren integrierten LED-Schaltkreis modulierbar. Es können somit unterschiedliche Datensignale, Datensignale nach unterschiedlichen Kommunikationsstandards und Datensignale unterschiedlicher Anwendungen parallel über mehrere integrierte LED-Schaltkreise mittels VLC gleichzeitig übertragen werden. Für eine Leuchte mit einem Feld (Array) integrierter LED-Schaltkreise als lichtabgebender Elemente lässt sich somit die verfügbare Bandbreite für die Datenübertragung infolge der einzeln und unabhängig voneinander anzusteuernden integrierten LED-Schaltkreise entsprechend der Anzahl der integrierten LED-Schaltkreise des Felds erhöhen. Neben Zeitmultiplexverfahren werden damit auch Raummultiplexverfahren zur Nachrichtenübertragung, bei denen mehrere Signale zusammengefasst und zugleich (simultan) übertragen werden, und somit eine entsprechende Vergrößerung der Datenübertragungskapazität möglich.

Gegenüber dem bekannten LED-Modul mit einer zugeordneten Funkkommunikationsvorrichtung wird erfindungsgemäß ein in Abstrahlrichtung der LED verringerter Flächenbedarf des LED-Halbleiterbauelements erzielt, da hier keine separate Antennenstruktur zusätzlich und elektromagnetisch entkoppelt von den übrigen Schaltungselementen bereitgestellt werden muss. Weiter wird die LED sowohl für die Beleuchtungsfunktion als auch für die die Erzeugung des Trägersignals für die Kommunikation genutzt, während in dem bekannten LED Modul mit Funkkommunikationsvorrichtung separate Schaltungen zur Erzeugung eines Trägersignals notwendig sind.

Die erfindungsgemäß integrierte Ausführung des LED-Moduls mit den integrierten LED-Schaltkreisen mit einem zugeordneten elektronischen Schaltkreis zur VLC-Kommunikation in einem Halbleitermodul ermöglicht zugleich eine einfache Handhabung in der Produktion, da das entsprechend ausgebildete LED-Modul als ein Bauelement, insbesondere oberflächenmontiertes Bauelement handhabbar ist, ohne dass zusätzliche ergänzende elektrische Verbindungen notwendig sind. Dabei kann zumindest ein integrierter LED-Schaltkreis als LED-Chip in einem Chipgehäuse untergebracht sein.

Weitere vorteilhafte Ausbildungen der Erfindung sind in den Unteransprüchen gezeigt. Es ist besonders bevorzugt, wenn der integrierte LED-Schaltkreis in dem elektronischen Schaltkreis eine Modulatorschaltung umfasst, und die Modulatorschaltung dafür eingerichtet ist, einen Strom durch die zugeordnete Leuchtdiode mit dem informationstragenden Signal zu modulieren.

Ein vorteilhafter integrierter LED-Schaltkreis ist dadurch gekennzeichnet, dass der elektronische Schaltkreis eine Ansteuerschaltung umfasst, die ausgelegt ist, den Strom durch die dem elektronischen Schaltkreis zugeordnete mindestens eine Leuchtdiode zu erzeugen.

Eine weitere Ausführung des erfindungsgemäßen LED-Moduls zeichnet sich dadurch aus, dass die mindestens eine Leuchtdiode und der zugeordnete elektronische Schaltkreis in GaN-on-Si-Technologie (Galliumnitrid-auf-Silizium-Technologie) aufgebaut sind.

Die Anwendung des erfindungsgemäßen LED-Moduls weist als das informationstragende Signal ein Navigationssignal auf. Eine nichterfindungsgemäße Anwendung des LED-Moduls kann als das informationstragende Signal ein Datensignal, insbesondere für die Übertragung von Internetdaten, aufweisen.

Es ist weiter besonders vorteilhaft, wenn der integrierte LED-Schaltkreis nach einem Ausführungsbeispiel den elektronischen Schaltkreis derart ausgelegt umfasst, dass die zugeordnete Leuchtdiode als Fotodiode zu betreiben ist, und der elektronische Schaltkreis ein informationstragendes Empfangssignal zu erzeugt, das einen Fotostrom durch die als Fotodiode betriebene Leuchtdiode repräsentiert. Damit kann bei VLC-Kommunikation auch ein Empfänger durch das erfindungsgemäße LED-Modul gebildet werden.

Damit lässt sich in einfacher Weise ein Rückkanal für die VLC-Kommunikation bereitstellen, der weitere Anwendungen für das erfindungsgemäße integrierte LED-Modul unter Nutzung der vorhandenen Beleuchtungs- und Kommunikationsstruktur des Gebäudes ermöglicht.

Die technische Aufgabe wird durch das LED-Modul umfassend eine Mehrzahl von integrierten LED-Schaltkreisen nach einem der gezeigten Ausführungsbeispiele gelöst. Dabei ist das LED-Modul dadurch gekennzeichnet, dass der jeder Leuchtdiode jeweils zugeordnete elektronische Schaltkreis ausgelegt ist, den Strom durch die Leuchtdiode mit einem informationstragenden Signal unabhängig von einem anderen Strom durch eine andere Leuchtdiode zu modulieren. Die technische Aufgabe wird durch eine LED-Anordnung umfassend eine Mehrzahl von integrierten LED-Schaltkreisen nach einem der gezeigten Ausführungsbeispiele gelöst. Dabei ist die LED-Anordnung dadurch gekennzeichnet, dass der jeder Leuchtdiode jeweils zugeordnete elektronische Schaltkreis ausgelegt ist, den Strom durch die Leuchtdiode mit einem informationstragenden Signal unabhängig von einem anderen Strom durch eine andere Leuchtdiode zu modulieren.

Damit wird erfindungsgemäß jeder integrierte LED-Schaltkreis des LED-Moduls einzeln und damit unabhängig von einem anderen integrierten LED-Schaltkreis modulierbar. Es können somit unterschiedliche Datensignale, Datensignale nach unterschiedlichen Kommunikationsstandards und Datensignale unterschiedlicher Anwendungen parallel über unterschiedliche integrierte LED-Schaltkreise mittels VLC-Kommunikation übertragen werden. Für eine Leuchte mit einem LED-Modul mit einem Feld (Array) integrierter LED-Schaltkreise als lichtabgebender Elemente lässt sich somit die verfügbare Bandbreite für die Datenübertragung infolge der einzeln und unabhängig voneinander anzusteuernder integrierter LED-Schaltkreise entsprechend der Anzahl der integrierten LED-Schaltkreise des Felds erhöhen. Neben Zeitmultiplexverfahren werden damit auch Raummultiplexverfahren zur Nachrichtenübertragung, bei denen mehrere Signale zusammengefasst und zugleich (simultan) übertragen werden, und somit eine entsprechende Vergrößerung der Datenübertragungskapazität möglich.

Es ist vorteilhaft, dass das LED-Modul so eingerichtet ist, dass die einzelnen integrierten LED-Schaltkreise der Mehrzahl von integrierten LED-Schaltkreise jeweils Licht in unterschiedliche Raumsegmente eines Raums, eines Gebäudes und/oder einer auszuleuchtenden Fläche abstrahlen.

Die technische Aufgabe wird ebenfalls durch eine Leuchte, umfassend ein LED-Modul nach einem der vorstehend gezeigten Ausführungsbeispiele gelöst.

Weitere Vorteile, Ziele und Merkmale der Erfindung werden im Folgenden anhand von Ausführungsbeispielen und den beigefügten Figuren dargelegt. Dabei zeigt:
- Fig. 1: eine Systemübersicht für ein VLC-System unter Nutzung der erfindungsgemäßen VLC Anordnung,
- Fig. 2: eine Darstellung eines bekannten LED-Schaltkreises, und
- Fig. 3: eine Darstellung eines erfindungsgemäßen integrierten LEDSchaltkreises zur Verwendung in einem Ausführungsbeispiel.

Die Erfindung ist nicht auf die gezeigten Ausführungsbeispiele beschränkt. Die diskutierten Merkmale können im Rahmen der in den anhängenden Patentansprüchen definierten Erfindung beliebig miteinander kombiniert werden. Dabei zeigen gleiche Bezugszeichen in den Figuren gleiche oder entsprechende Elemente, deren Erläuterung aus Gründen der knappen Darstellung nicht für jede Figur wiederholt wird.

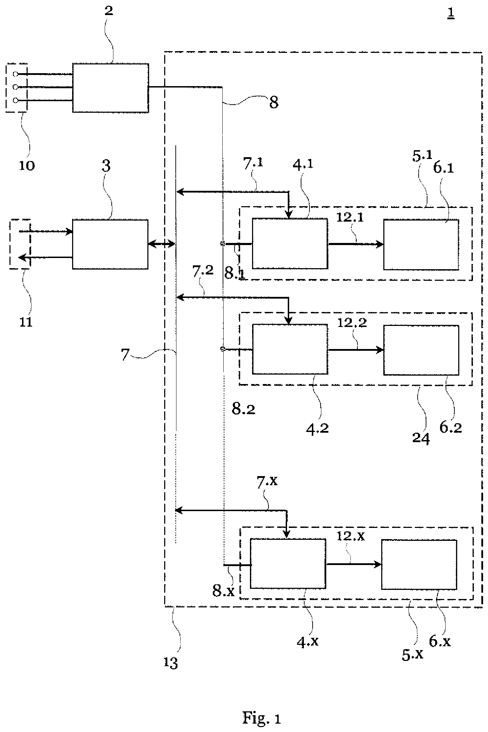

Fig. 1 zeigt eine Übersicht für ein VLC-System 1 unter Nutzung des erfindungsgemäßen integrierten LED-Schaltkreises und LED-Moduls. Das dargestellte VLC-System 1 zeigt zum einen die wesentlichen Komponenten des VLC-Systems 1 für die Energieversorgung und Ansteuerung einer Mehrzahl von LED-Modulen und/oder Leuchten und zum anderen die Verteilung der für die Kommunikation mittels moduliertem Licht wesentlichen Komponenten. Nicht dargestellt sind in Fig. 1 beispielsweise mechanische Komponenten, insbesondere Leuchtengehäuse, Trägerplatten, Montagemittel, usw. und an sich bekannte lichttechnische Einrichtungen, wie beispielsweise Schalter, Dimmer, usw.

Die einzelnen Leuchtmittel sind in Fig. 1 als Leuchtdioden (LED) 6.1, 6.2, ... 6.x ausgeführt. Die Leuchtmittel 6.1, 6.2, ... 6.x können beispielsweise als Lichtpunkte über einen Raum, ein Gebäude oder eine bestimmte Fläche im Freien verteilt sein. Besonders bevorzugt weisen die einzelnen LED 6.1, 6.2, ... 6.x jeweils eine bestimmte Abstrahlrichtung auf, in die die LEDs 6.1, 6.2, ... 6.x Licht abgeben. Dies wird beispielsweise über in einen LED-Chip integrierten Reflektor erreicht. Die Abstrahlrichtung einer LED 6.1, 6.2, ... 6.x bestimmt ein Raumsegment, das die LED 6.1, 6.2, ... 6.x bevorzugt und/oder ausschließlich beleuchtet.

Die einzelnen LEDs 6.1, 6.2, ... 6.x sind jeweils auf einem Substrat 5.1, 5.2, ... 5.x angeordnet. Auf dem Substrat 5.1, 5.2, ... 5.x befindet sich weiter für jede LED eine zugeordnete elektronische Schaltung 4.1, 4.2, ... 4.x. Vorteilhaft ist beispielsweise die Ausbildung des Substrats 5.1, 5.2, ... 5.x als Si-Substrat. Damit umfasst das erfindungsgemäße integrierte LED-Schaltkreis als LED-Halbleiterbauelement (LED-Chip) in integrierter Form das eigentliche lichtabgebende Element Leuchtdiode (LED), als auch einen ausschließlich dieser LED zugeordneten, elektronischen Schaltkreis 4.1, 4.2, ... 4.x. Ohne Einschränkung können abweichend von dem in Fig. 1 auch mehrere LEDs 6.1, 6.2, ... 6.x einem elektronischen Schaltkreis 4.1, 4.2, ... 4.x zugeordnet sein. Erfindungsgemäß ist diese Mehrzahl von LEDs 6.1, 6.2, ... 6.x ebenfalls gemeinsam mit einem, den mehreren LED 6.1, 6.2, ... 6.x zugeordneten elektronischen Schaltkreis 4.1, 4.2, ... 4.x auf einem Substrat 5.1, 5.2, ... 5.x angeordnet und bilden einen gemeinsamen integrierten LED-Schaltkreis.

In Fig. 1 ist zum einen das Substrat 5.1, 5.2, ... 5.x mit den Leuchtdioden 6.1, 6.2, ... 6.x und den zugeordneten elektronischen Schaltkreisen 4.1, 4.2, ... 4.x gezeigt. Zum anderen ist in Fig. 1 eine Leiterplatte 13 (engl. Printed Circuit Board, abgekürzt PCB) dargestellt, auf der die einzelnen integrierten LED-Schaltkreise umfassend jeweils ein einzelnes Substrat 5.1, 5.2, ... 5.x montiert sind. Die Leiterplatte 13 ist ein wesentlicher Bestandteil eines LED-Moduls einer Leuchte.

Der elektronische Schaltkreis 4.1, 4.2, ... 4.x erfüllt im Rahmen der Erfindung zwei wesentliche Aufgaben. Zum einen umfasst der elektronische Schaltkreis 4.1, 4.2, ... 4.x eine Ansteuerschaltung, die einen Strom (Diodenstrom) für die Ansteuerung der LED 6.1, 6.2, ... 6.x des zugeordneten LED-Chips erzeugt. Für die Ansteuerung der LED 6.1, 6.2, ... 6.x mit dem der entsprechend vorgegebenen Lichtabgabe notwendigen Stromstärke wird der elektronische Schaltkreis 4.1, 4.2, ... 4.x in Fig. 1 über die Stromversorgungsleitung 8 und die Stromversorgungsleitungen 8.1, 8.2, ... 8.x der einzelnen integrierten LED-Schaltkreise von einem Betriebsgerät 2 mit einem Speisestrom versorgt. Das Betriebsgerät 2 erfüllt neben der Bereitstellung eines Stroms für die integrierten LED-Schaltkreise weitere Funktionen wie Potentialtrennung, insbesondere Bereitstellen einer SELV-Barriere und ist an sich bekannt. Das Betriebsgerät 2 ist hierfür eingangsseitig mit einer gebäudeseitigen Stromversorgung 10 verbunden

Das Betriebsgerät 2 kann beispielsweise auch Steuerungsfunktionen, beispielsweise Dimmen, für die Steuerung der Lichtabgabe der integrierten LED-Schaltkreise wahrnehmen. Weiter kann auch eine Kommunikationsschnittstelle, beispielsweise nach einem Standard wie DALI^{™}, in das Betriebsgerät 2 integriert sein.

Erfindungsgemäß umfasst der elektronische Schaltkreis 4.1, 4.2, ... 4.x auch noch eine Modulatorschaltung. Diese Modulatorschaltung des elektronischen Schaltkreises 4.1, 4.2, ... 4.x ist eingerichtet, einen von der Ansteuerschaltung erzeugten Diodenstrom und ein informationstragendes Signal 7.1, 7.2, ... 7.x als Eingangssignale zu erhalten und einen mit dem informationstragenden Signal modulierten Strom 12.1, 12.2, ..., 12.x an die dem jeweiligen Schaltkreis zugeordnete mindestens eine Leuchtdiode 6.1, 6.2, ... 6.x für die Steuerung der Lichtabgabe der Leuchtdiode 6.1, 6.2, ... 6.x abzugeben.

Die Modulation der Leuchtdiode 6.1, 6.2, ... 6.x erfolgt in einem Ausführungsbeispiel durch Modulation eines Stromes. Ebenso kann die Modulatorschaltung des elektronischen Schaltkreises 4.1, 4.2, ... 4.x als steuerbare Stromquelle ausgeführt sein. Die als steuerbare Stromquelle ausgebildete Modulatorschaltung des elektronischen Schaltkreises 4.1, 4.2, ... 4.x erzeugt aus einer konstanten Spannung auf den Stromversorgungsleitungen 8.1, 8.2, ... 8.x einen modulierten Strom 12.1, 12.2, .., 12.x und speist mit dem modulierten Strom 12.1, 12.2, .., 12.x die Leuchtdioden 6.1, 6.2, ... 6.x.

Die Modulatorschaltung des elektronischen Schaltkreises 4.1, 4.2, ..., 4.x kann für die Modulation des von der Ansteuerschaltung bereitgestellten Stroms ein bekanntes Modulationsverfahren verwenden, beispielsweise Amplitudenmodulation, aber auch andere für VLC einsetzbare Modulationsverfahren. Entscheidend ist, dass die Modulation des Stroms durch die eine oder mehrere zugeordnete Leuchtdioden 6.1, 6.2, ... 6.x mit dem informationstragenden Signal 7.1, 7.2, ... 7.x auf dem integrierten LED-Schaltkreis in dem der jeweiligen einer oder mehreren Leuchtdioden 6.1, 6.2, ... 6.x zugeordneten elektronischen Schaltkreis 4.1, 4.2, ..., 4.x erfolgt.

In Fig. 1 wird das informationstragende Signal 7.1, 7.2, ... 7.x den einzelnen elektronischen Schaltkreisen 4.1, 4.2, ..., 4.x über eine Busleitung 7 von einem VLC-Steuergerät 3 übermittelt. Ebenso kann das informationstragende Signal 7.1, 7.2, ... 7.x über die Verbindung mittels festverdrahtete Leitungen oder ein anderes Kommunikationsmittel, beispielweise drahtlos, übermittelt werden. Wesentlich für das erfindungsgemäße Vorgehen ist, dass der elektronische Schaltkreis 4.1, 4.2, ..., 4.x jedes LED-Chips jeweils ein spezifisches informationstragendes Signal als Eingangsgröße übermittelt bekommt, um integriert in den einzelnen LED-Chip und spezifisch für den LED-Chip die Lichtabgabe mit dem informationstragenden Signal zu modulieren.

Das VLC-Steuergerät 3 verfügt neben der Schnittstelle zu den einzelnen LED-Chips auch über eine Datenschnittstelle, z.B. zu einem Netzwerk 11, über das die Daten und Information des informationstragenden Signals 7.1, 7.2, ... 7.x an das VLC-Steuergerät 3 übergeben werden.

Das VLC-Steuergerät 3 ist in Figur 1 getrennt von dem Betriebsgerät 2 dargestellt. Das VLC-Steuergerät kann ebenso vollständig oder mit einem Teil seiner Funktionen in das Betriebsgerät 2 integriert ausgeführt sein.

Das VLC-Steuergerät 3 ist vorteilhaft dafür ausgelegt, informationstragende Signale nach unterschiedlichen Kommunikationsstandards, für unterschiedliche Anwendungen und mit unterschiedlichen Dateninhalten zu erzeugen, zu verarbeiten und an die einzelnen elektronischen Schaltkreise 4.1, 4.2, ..., 4.x der jeweiligen LED-Chips zu übermitteln. Damit wird es möglich, gleichzeitig über eine Mehrzahl von LEDs 6.1, 6.2, ... 6.x unterschiedliche VLC-Signale zu senden. Die gesamte, dem VLC-System zu Verfügung stehende Bandbreite und damit die Übertragungskapazität des VLC-Systems erhöht sich so deutlich aufgrund der integriert ausgeführten LEDs 6.1, 6.2, ... 6.x mit in den LED-Chip ausgeführten, VLC-geeigneten Modulatorschaltungen des elektronischen Schaltkreises 4.1, 4.2, ..., 4.x gegenüber einer zentral und damit einheitlich ausgeführten Modulation mit dem informationstragenden Signal.

Beispielsweise kann ein Feld (Array) aus 4x4 erfindungsgemäß ausgeführten LED-Chips die verfügbare Übertragungsbrandbreite theoretisch bis zum 16-fachen gegenüber der einer zentralen Modulation des Arrays mit einem informationstragenden Signal erhöhen. Eine Realisierung derartiger LED-Arrays ist insbesondere auch mittels hybrider Integration unter Nutzung von GaN auf Silizium zu verwirklichen. Das LED-Modul umfasst in diesem Ausführungsbeispiel ein Feld integrierter LED-Schaltkreise mit einzeln adressierbaren LEDs 6.1, 6.2, ... 6.x sowie jeweils zugeordneter elektronischer Schaltkreise 4.1, 4.2, ..., 4.x für die jeweilige, getrennte und damit unabhängig ausführbare Modulation der Lichtabgabe der einzelnen LEDs 6.1, 6.2, ... 6.x. Es ist in dem LED-Modul gemäß diesem Ausführungsbeispiel auch die entsprechende Ansteuerschaltung für die einzelnen LEDs 6.1, 6.2, ... 6.x anzuordnen. Damit ist im Rahmen der Fertigung und Montage der Komponenten eines VLCfähigen Lichtsystems weitgehender Rückgriff auf automatisierte Bestückung von LED-Chips als oberflächenmontierter Bauelemente (Surface-Mounted-Devices - SMD) möglich und eine ergänzende Verdrahtung getrennter Modulationsschaltungen ist nicht erforderlich.

Besonders vorteilhaft ist die Erfindung im Rahmen eines Navigationssystems für den Einsatz innerhalb geschlossener Räume und innerhalb von Gebäuden zu verwenden. Hierbei enthält das informationstragende Signal für jeden oder zumindest für mehrere elektronische Schaltkreise 4.1, 4.2, ..., 4.x und damit für die zugeordnete eine oder mehrere LEDs 6.1, 6.2, ..., 6.x eine ortsspezifische Information. Ein Empfänger des von einer LED 6.1, 6.2, ..., 6.x mittels Modulation des emittierten Lichts übermittelten ortsspezifischen Information kann mittels Demodulation und Auswertung, beispielsweise mittels Vergleich der empfangenen ortspezifischen Information mit einer zentral in einer Datenbank gespeicherten Ortsinformation der sendenden LED 6.1, 6.2, ..., 6.x, eine Information über seine Position in dem ausgeleuchteten Bereich ermitteln. Damit ist eine Positionsbestimmung innerhalb eines ausgeleuchteten Bereichs in einfacher Weise möglich.

Die Auswertung der durch den Empfänger ermittelten ortspezifischen Information kann dezentral in dem Empfänger oder zentral in einem Positionierungsserver erfolgen. Hierfür kann alternativ oder zusätzlich zu einem Funkverfahren für die Übermittlung der empfangenen und demodulierten ortsspezifischen Information ein Rückkanal mittels VLC in dem erfindungsgemäßen VLC-System 1 vorgesehen sein.

In Fig. 1 ist ein Rückkanal nicht explizit gezeigt. Ein Rückkanal nach einem Ausführungsbeispiel der Erfindung umfasst beispielsweise einen elektronischen Schaltkreis 4.1, 4.2, ..., 4.x, der dafür ausgelegt ist die zugeordnete(n) eine oder mehreren LEDs 6.1, 6.2, ..., 6.x als Fotodiode zu betreiben. Weiter umfasst der elektronische Schaltkreis 4.1, 4.2, ..., 4.x nach diesem Ausführungsbeispiel Schaltungen, die ausgelegt sind, ein informationstragendes Empfangssignal zu erzeugen, das einen Fotostrom durch die als Fotodiode betriebene eine oder mehrere LEDs 6.1, 6.2, ..., 6.x repräsentiert. Das informationstragende Empfangssignal ist dann über die in diesem Ausfuhrungsbeispiel bidirektional ausgeführte Verbindung, beispielsweise Busverbindung 7, an das VLC-Steuergerät 3 zu übertragen und dort entsprechend der Anwendung, beispielsweise eine Navigationsanwendung, weiterzuverarbeiten. Im Rahmen einer Navigationsanwendung kann dies beispielsweise die Übermittlung der Information aus dem Empfangssignal, insbesondere eine Leuchtenaddresse oder eine Identifizierungsinformation eines integrierten LED-Schaltkreises oder LED-Moduls an den Positionierungsserver sein.

Weiter können Signale nach unterschiedlicher Standards und unterschiedlichen Protokollen parallel über verschiedene integrierte LED-Schaltkreise einer LED-Anordnung oder eines LED-Moduls übertragen werden. Wesentlich ist hierfür, dass die elektronischen Schaltkreise 4.1, 4.2, ..., 4.x unterschiedlicher integrierter LED-Schaltkreise den Strom 12.1, 12.2, ..., 12.x durch die jeweils zugeordneten LEDs 6.1, 6.2, ..., 6.x unabhängig voneinander mit jeweils unterschiedlichen informationstragenden Signalen 7.1, 7.2, ..., 7.x modulieren können. Das Einsatzspektrum, insbesondere in Bezug auf die Verwendung unterschiedlicher VLC-Standards und unterschiedlicher Anwendungen, wie beispielsweise Streaming und Navigation, und die Datenübertragungskapazität einer entsprechend der Erfindung ausgebildeten Leuchte mit einer Mehrzahl von erfindungsgemäßen LEDs 6.1, 6.2, ..., 6.x erhöht sich dementsprechend.

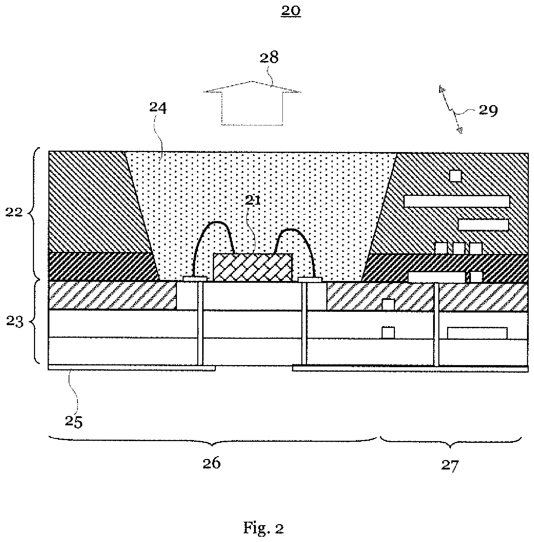

In Fig. 2 wird eine Darstellung einer bekannten LED-Anordnung gezeigt, aus der in Verbindung mit Fig. 1 Vorteile der Erfindung deutlich werden. Eine bekannte LED-Anordnung 20 umfasst eine LED 21, die auf einer Oberfläche einer Trägerstruktur 23 angeordnet ist. Die LED-Anordnung 20 weist weiter in einem oberen Bereich 22 einen Reflektor und beispielsweise die Lichtabgabe beeinflussende Schichten, beispielsweise eine Phosphorschicht 24, möglicherweise auch optische Elemente wie Linsen, auf. Die Trägerstruktur 23 ist in Fig. 2 mit mehreren Schichten dargestellt, die die für die Ansteuerung der LED 21 notwendigen Leiterstrukturen 25, Kontaktierungen mittels Vias, sowie integriert ausgebildete Schaltungselemente zeigen.

Weiter ist in Fig. 2 dargestellt, dass die LED 20 in einem ersten Teilbereich 26 die vorstehend benannten, für die Aufgabe der Lichtemission notwendigen Strukturen und Elemente umfasst, während in einem zweiten Teilbereich 27 weitere Strukturen und Elemente angeordnet sind, die einer der Kommunikation mittels Funkwellen dienen. Damit sind auf der LED 20 Teile der Oberfläche der LED 20 für die Abgabe von Licht 28 in einem ersten Bereich 26 und Teile der Oberfläche der LED 20 in einem zweiten Bereich 27 mit Antennenstrukturen für das Abstrahlen von Funkwellen 29 erforderlich und angeordnet.

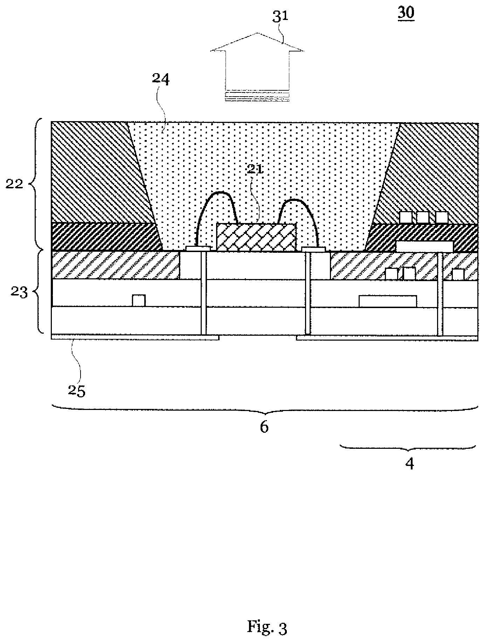

Aus einem Vergleich der bekannten LED 20 in Fig. 2 mit einem erfindungsgemäß ausgebildeten integrierten LED-Schaltkreis 30 nach Fig. 3 wird ein weiterer Vorteil des erfindungsgemäßen integrierten LED-Schaltkreis 30 deutlich: Das in Fig.3 gezeigte Ausführungsbeispiel integriert die Kommunikationsfunktion mittels VLC auf Ebene des integrierten LED-Schaltkreis 30. Der elektronische Schaltkreis 4, 4.1, 4.2, .., 4.x umfasst eine Modulatorschaltung, die das informationstragende Signal zur Modulation des das emittierte Licht 31 bestimmenden Stroms 12.1, 12.2, ..., 12.x durch die LED 21 nutzt. Damit ist jedoch keine flächenmäßig ausgedehnte Antennenstruktur für eine parallel ausgeführte Funkkommunikationskomponente, die entsprechenden Flächenbedarf auf der Oberfläche des LED-Moduls 30 erzeugt, für die Wahrnehmung der Kommunikationsfunktion notwendig. Der Freiheitsgrad für den Entwickler erhöht sich dementsprechend bei Nutzung der Erfindung. Die Anordnung des elektronischen Schaltkreises 4, 4.1, 4.2, ..., 4.x in unmittelbarer räumlicher Nähe zu den LED 6.1, 6.2, ..., 6.x ermöglicht weiter einen optimalen Signal-zu-Rauschabstand (engl. Signal-to-Noise-Ratio, kurz SNR) bei Verstärkung des informationstragenden Signals. Es wird somit möglich, Signale mit sehr geringer Stärke auf das abgegebene Licht zu modulieren beziehungsweise durch den Empfänger zu empfangen und auszuwerten.

## Patentansprüche

1. LED-Modul umfassend eine Mehrzahl integrierter LED-Schaltkreise (5; 5.1, 5.2, .., 5.x), jeweils umfassend mindestens eine Leuchtdiode (6; 6.1, 6.2" 6.x) und einen der mindestens einen Leuchtdiode (6; 6.1, 6.2, .., 6.x) zugeordneten elektronischen Schaltkreis (4; 4.1,4.2, .., 4.x),
wobei
die einzelnen integrierten LED-Schaltkreise (5; 5.1, 5.2, .., 5.x) der Mehrzahl von integrierten LED-Schaltkreisen (5; 5.1, 5.2, .., 5.x) jeweils Licht in unterschiedliche Raumsegmente abstrahlen, und
jeder elektronische Schaltkreis (4) ausgelegt ist, einen Strom (7.1, 7.2,..., 7.x) durch die mindestens eine, zugeordnete Leuchtdiode (6; 6.1, 6.2,...,6.x) mit einem informationstragenden Signal (7; 7.1, 7.2,..., 7.x) zu modulieren, wobei das informationstragende Signal (7; 7.1, 7.2,..., 7.x) ein Navigationssignal ist,
**dadurch gekennzeichnet,**
**dass** in jedem integrierten LED-Schaltkreis (5; 5.1, 5.2, .., 5.x) die mindestens eine Leuchtdiode (6; 6.1, 6.2, .., 6.x) und der zugeordnete elektronische Schaltkreis (4; 4.1,4.2,.., 4.x) auf einem gemeinsamen Substrat angeordnet und als ein integriertes Halbleiterbauelement ausgebildet sind, und
**dass** jeder elektronische Schaltkreis (4; 4.1, 4.2, .., 4.x) ausgelegt ist, den Strom (7.1, 7.2, ..., 7.x) durch die mindestens eine zugeordnete Leuchtdiode (6; 6.1, 6.2, .., 6.x) mit dem informationstragenden Signal (7; 7.1, 7.2,..., 7.x) unabhängig von den Strömen (7.1, 7.2,...,7.x) durch die mindestens eine Leuchtdiode (6; 6.1, 6.2,...,6.x) der anderen integrierten LED-Schaltkreise (5; 5.1, 5.2,..., 5.x) zu modulieren.

2. LED-Modul nach Anspruch 1, **dadurch gekennzeichnet, dass** die elektronischen Schaltkreise 4.1, 4.2, .., 4.x) jeweils eine Modulatorschaltung umfassen, und die Modulatorschaltung eingerichtet ist, einen Strom durch die zugeordnete Leuchtdiode mit dem informationstragenden Signal (7, 7.1, 7.2,..., 7.x) zu modulieren.

3. LED-Modul nach einem der Ansprüche 1 oder 2, **dadurch gekennzeichnet, dass** die elektronischen Schaltkreise 4.1, 4.2, .., 4.x) jeweils eine Ansteuerschaltung umfassen, die ausgelegt ist, den Strom durch die zugeordnete Leuchtdiode (6; 6.1, 6.2, ...,6.x) zu erzeugen.

4. LED-Modul nach einem der Ansprüche 1 bis 3, **dadurch gekennzeichnet, dass** jeweils die Leuchtdiode (6; 6.1, 6.2, ...,6.x) und der zugeordnete elektronische Schaltkreis (4; 4.1, 4.2, .., 4.x) in GaN-on-Si-Technologie aufgebaut sind.

5. LED-Modul nach einem der Ansprüche 1 bis 4, **dadurch gekennzeichnet, dass** die elektronischen Schaltkreise (4; 4.1, 4.2, .., 4.x) jeweils weiter ausgelegt sind, die zugeordnete mindestens eine Leuchtdiode (6; 6.1, 6.2, ...,6.x) als Fotodiode zu betreiben, und ein informationstragendes Empfangssignal zu erzeugen, das einen Fotostrom durch die als Fotodiode betriebene Leuchtdiode (6; 6.1, 6.2, ...,6.x) repräsentiert.

6. LED-Modul nach einem der Ansprüche 1 bis 5, **dadurch gekennzeichnet, dass** das LED-Modul ausgelegt ist, eine Kommunikation mittels sichtbarem Licht und eine Beleuchtungsfunktion mittels der mindestens einen Leuchtdiode (6; 6.1, 6.2, ...,6.x) auszuführen.

7. LED-Modul nach einem der Ansprüche 1 bis 6, **dadurch gekennzeichnet, dass** die informationstragenden Signale (7, 7.1, 7.2, ..., 7.x) jeweils Navigationssignale mit einer ortspezifischen Information bezüglich des integrierten LED-Schaltkreises (5; 5.1, 5.2, ...,5.x) sind.

8. LED-Modul nach Anspruch 7, **dadurch gekennzeichnet, dass** das Navigationssignal eine Identifikationsnummer oder eine Leuchten-Adresse als ortspezifische Information des integrierten LED-Schaltkreises (5; 5.1, 5.2,...,5.x) umfasst.

9. LED-Modul nach einem der Ansprüche 1 bis 8, **dadurch gekennzeichnet, dass** unterschiedliche elektronische Schaltkreise (4; 4.1,4.2,.., 4.x) der elektronischen Schaltkreise (4; 4.1, 4.2, .., 4.x) des LED-Moduls ausgelegt sind, jeweils spezifische informationstragende Signale (7, 7.1, 7.2,..., 7.x) als Eingangsgröße zugeführt zu erhalten.

10. LED-Modul nach Anspruch 9, **dadurch gekennzeichnet, dass** die spezifischen informationstragenden Signale (7, 7.1, 7.2, ..., 7.x) Datensignale jeweils unterschiedlicher Kommunikationsstandards und unterschiedlicher Dateninhalte und unterschiedlicher Anwendungen aufweisen.

11. LED-Modul nach einem der Ansprüche 1 bis 10, **dadurch gekennzeichnet, dass** die elektronischen Schaltkreise (4; 4.1,4.2,.., 4.x) jeweils eine steuerbare Stromquelle zur Erzeugung des Stroms für die zugeordnete mindestens eine Leuchtdiode (6; 6.1, 6.2, ...,6.x) aufweisen.

12. Leuchte, umfassend
ein LED-Modul nach einem der Ansprüche 1 bis 11.

## Claims

1. LED module comprising a plurality of integrated LED circuits (5; 5.1, 5.2, .., 5.x), each comprising at least one light-emitting diode (6; 6.1, 6.2, , 6.x) and an electronic circuit (4; 4.1, 4.2, .., 4.x) assigned to the at least one light-emitting diode (6; 6.1, 6.2, .., 6.x),
wherein
the individual integrated LED circuits (5; 5.1, 5.2, .., 5.x) of the plurality of integrated LED circuits (5; 5.1, 5.2,.., 5.x) each emit light into different spatial segments, and
each electronic circuit (4) is designed to modulate a current (7.1, 7.2,..., 7.x) through the at least one assigned light-emitting diode (6; 6.1, 6.2,...,6.x) with an information-carrying signal (7; 7.1, 7.2,..., 7.x), wherein the information-carrying signal (7; 7.1, 7.2,..., 7.x) is a navigation signal,
**characterized in that**
in each integrated LED circuit (5; 5.1, 5.2, .., 5.x) the at least one light-emitting diode (6; 6.1, 6.2, .., 6.x) and the assigned electronic circuit (4; 4.1, 4.2, .., 4.x) are arranged on a common substrate and are designed as an integrated semiconductor component, and
**in that** each electronic circuit (4; 4.1, 4.2, .., 4.x) is designed to modulate the current (7.1, 7.2,..., 7.x) through the at least one assigned light-emitting diode (6; 6.1, 6.2, .., 6.x) with the information-carrying signal (7; 7.1, 7.2,..., 7.x) independently of the currents (7.1, 7.2, ..., 7.x) through the at least one light-emitting diode (6; 6.1, 6.2,...,6.x) of the other integrated LED circuits (5; 5.1, 5.2,..., 5.x).

2. LED module according to Claim 1, **characterized in that**
the electronic circuits (4; 4.1,4.2, .., 4.x) each comprise a modulator circuit,
and
the modulator circuit is set up to modulate a current through the assigned light-emitting diode with the information-carrying signal (7, 7.1, 7.2,..., 7.x).

3. LED module according to any one of Claims 1 or 2, **characterized in that** the electronic circuits (4; 4.1, 4.2, .., 4.x) each comprise a control circuit,
which is designed to generate the current through the assigned light-emitting diode (6; 6.1, 6.2, ...,6.x).

4. LED module according to any one of Claims 1 to 3, **characterized in that**
in each case the light-emitting diode (6; 6.1, 6.2, ...,6.x) and the assigned electronic circuit (4; 4.1, 4.2, .., 4.x) are constructed in GaN-on-Si technology.

5. LED module according to any one of Claims 1 to 4, **characterized in that**
the electronic circuits (4; 4.1, 4.2, .., 4.x) are in each case further designed to operate the assigned at least one light-emitting diode (6; 6.1, 6.2, ...,6.x) as a photodiode, and
generate an information-carrying reception signal, which represents a photocurrent through the light-emitting diode (6; 6.1, 6.2, ...,6.x) operated as a photodiode.

6. LED module according to any one of Claims 1 to 5, **characterized in that**
the LED module is designed to carry out communication by means of visible light and a lighting function by means of the at least one light-emitting diode (6; 6.1, 6.2, ...,6.x).

7. LED module according to any one of Claims 1 to 6, **characterized in that**
the information-carrying signals (7, 7.1, 7.2,..., 7.x) are each navigation signals with location-specific information regarding the integrated LED circuit (5; 5.1, 5.2, ...,5.x).

8. LED module according to Claim 7, **characterized in that**
the navigation signal comprises an identification number or a luminaire address as location-specific information of the integrated LED circuit (5; 5.1, 5.2,...,5.x).

9. LED module according to any one of Claims 1 to 8, **characterized in that**
different electronic circuits (4; 4.1,4.2, .., 4.x) of the electronic circuits (4; 4.1, 4.2, .., 4.x) of the LED module are designed to receive in each case specific information-carrying signals (7, 7.1, 7.2,..., 7.x) as input variable.

10. LED module according to Claim 9, **characterized in that**
the specific information-carrying signals (7, 7.1, 7.2,..., 7.x) have data signals in each case of different communication standards and with different data contents and of different applications.

11. LED module according to any one of Claims 1 to 10, **characterized in that**
the electronic circuits (4; 4.1, 4.2, .., 4.x) each have a controllable power source for generating the current for the assigned at least one light-emitting diode (6; 6.1, 6.2, ...,6.x).

12. Luminaire, comprising
an LED module according to any one of Claims 1 to 11.

## Revendications

1. Module de DEL comprenant une pluralité de circuits de DEL (5 ; 5.1, 5.2,.., 5.x) intégrés, comprenant respectivement au moins une diode électroluminescente (6 ; 6.1, 6.2,.., 6.x) et un circuit électronique (4 ; 4.1, 4.2,.., 4.x) associé à l'au moins une diode électroluminescente (6 ; 6.1, 6.2,.., 6.x),
dans lequel
les circuits de DEL (5 ; 5.1, 5.2,.., 5.x) intégrés individuels de la pluralité de circuits de DEL (5 ; 5.1, 5.2,.., 5.x) intégrés émettent respectivement de la lumière dans différents segments spatiaux et
chaque circuit électronique (4) est conçu pour moduler un courant (7.1, 7.2,..., 7.x) à travers l'au moins une diode électroluminescente (6 ; 6.1, 6.2,..., 6.x) associée avec un signal porteur d'informations (7 ; 7.1, 7.2,..., 7.x), le signal porteur d'informations (7 ; 7.1, 7.2,..., 7.x) étant un signal de navigation,
**caractérisé**
**en ce que** dans chaque circuit de DEL (5 ; 5.1, 5.2, .., 5.x) intégré l'au moins une diode électroluminescente (6 ; 6.1, 6.2,..., 6.x) et le circuit électronique (4 ; 4.1, 4.2,.., 4.x) associé sont disposés sur un substrat commun et réalisés sous la forme d'un élément semi-conducteur intégré et
**en ce que** chaque circuit électronique (4 ; 4.1, 4.2,.., 4.x) est conçu pour moduler le courant (7.1, 7.2,..., 7.x) à travers l'au moins une diode électroluminescente (6 ; 6.1, 6.2,..., 6.x) associée avec le signal porteur d'informations (7 ; 7.1, 7.2,..., 7.x) indépendamment des courants (7.1, 7.2,..., 7.x) à travers l'au moins une diode électroluminescente (6 ; 6.1, 6.2,..., 6.x) des autres circuits de DEL (5 ; 5.1, 5.2,..., 5.x) intégrés.

2. Module de DEL selon la revendication **1, caractérisé**
**en ce que** les circuits électroniques (4 ; 4.1, 4.2,.., 4.x) comprennent respectivement un circuit modulateur,
et
le circuit modulateur est configuré pour moduler un courant à travers la diode électroluminescente associée avec un signal porteur d'informations (7, 7.1, 7.2,..., 7.x).

3. Module de DEL selon l'une quelconque des revendications 1 ou 2, **caractérisé**
**en ce que** les circuits électroniques (4 ; 4.1, 4.2,.., 4.x) comprennent respectivement un circuit de commande,
qui est conçu pour générer le courant à travers la diode électroluminescente (6 ; 6.1, 6.2,..., 6.x) associée.

4. Module de DEL selon l'une quelconque des revendications 1 à 3, **caractérisé**
**en ce que** la diode électroluminescente (6 ; 6.1, 6.2,..., 6.x) et le circuit électronique (4 ; 4.1, 4.2,.., 4.x) associé sont respectivement réalisés dans la technologie GaN-on-Si.

5. Module de DEL selon l'une quelconque des revendications 1 à 4, **caractérisé**
**en ce que** les circuits électroniques (4 ; 4.1, 4.2,.., 4.x) sont en outre conçus respectivement pour faire fonctionner l'au moins une diode électroluminescente (6 ; 6.1, 6.2,..., 6.x) associée comme une diode photoélectrique et
pour générer un signal de réception porteur d'informations, qui représente un courant photoélectrique à travers la diode électroluminescente (6 ; 6.1, 6.2,..., 6.x) fonctionnant comme une diode photoélectrique.

6. Module de DEL selon l'une quelconque des revendications 1 à 5, **caractérisé**
**en ce que** le module de DEL est conçu pour exécuter une communication au moyen de lumière visible et une fonction d'éclairage au moyen de l'au moins une diode électroluminescente (6 ; 6.1, 6.2,..., 6.x).

7. Module de DEL selon l'une quelconque des revendications 1 à 6, **caractérisé**
**en ce que** les signaux porteurs d'informations (7, 7.1, 7.2,..., 7.x) sont respectivement des signaux de navigation comprenant une information spécifique au lieu concernant le circuit de DEL (5 ; 5.1, 5.2,..., 5.x) intégré.

8. Module de DEL selon la revendication 7, **caractérisé**
**en ce que** le signal de navigation comprend un numéro d'identification ou une adresse de luminaire comme information spécifique au lieu du circuit de DEL (5 ; 5.1, 5.2,..., 5.x) intégré.

9. Module de DEL selon l'une quelconque des revendications 1 à 8, **caractérisé**
**en ce que** différents circuits électroniques (4 ; 4.1, 4.2,.., 4.x) des circuits électroniques (4 ; 4.1, 4.2,.., 4.x) du module de DEL sont conçus pour recevoir respectivement des signaux porteurs d'informations (7, 7.1, 7.2,..., 7.x) spécifiques comme grandeur d'entrée.

10. Module de DEL selon la revendication 9, **caractérisé**
**en ce que** les signaux porteurs d'informations (7, 7.1, 7.2,..., 7.x) spécifiques présentent respectivement des signaux de données de différentes normes de communication et de différents contenus de données et de différentes applications.

11. Module de DEL selon l'une quelconque des revendications 1 à 10, **caractérisé**
**en ce que** les circuits électroniques (4 ; 4.1, 4.2,.., 4.x) présentent respectivement une source de courant pouvant être commandée pour la génération du courant pour l'au moins une diode électroluminescente (6 ; 6.1, 6.2,..., 6.x) associée.

12. Luminaire comprenant
un module de DEL selon l'une quelconque des revendications 1 à 11.
